# EUROPEAN PATENT APPLICATION

(11) **EP 1 079 313 A2**
(43) Date of publication of application: **28.02.2001**
(21) Application number: 99650089.8
(22) Date of filing: 27.09.1999
(51) Int. Cl.: G06F 17/24

(54) **An audio processing system**

(30) Priority: 20.08.1999 IE 990712; 20.08.1999 IE 990713
(71) Applicant: Digitake Software Systems Limited, Dublin 8 (IE)
(72) Inventor: Bryans, Wilfred, Clondalkin, Dublin 22 (IE); Kirwan, Maurice, Donnybrook, Dublin 4 (IE)
(74) Representative: Weldon, Michael James

(57) **Abstract**

An audio processing system (1) has real time recording and logging computers (10,15) which record sound and annotation text in real time. A sound file (SF) and a log file (LF) are associated with each take. The logging computer (15) uses automatic entries to a tag file on a server (12) to maintain synchronism between the log and sound files. Timeline references are embedded as text within the log files. A transcription workstation (16) retrieves the corresponding sound and log files and the log file may be exported to a word processing application with the embedded time line references to provide a template. The transcription workstation (16) correlates time with digital data strings to allow simple payback using foot pedals in a conventional manner. It also allows selection of text using a graphical tool with automatic searching to the associated sound file segment.

## Description

The invention relates to an audio processing system for processing of audio proceedings of a setting such as a parliament or a Court chamber.

Unites States Patent Specification No. 5878186 describes such a system. A computer aided transcription (CAT) system operates in "virtual real time" to generate a textual record of the proceedings. A court reporter produces "transition markers" at changes of speakers. Because of pauses and court report time lags for transition markers, the text is often out of synchronisation with the audio signals. Further analysis is performed to achieve synchronisation by identifying a different time period.

United States Patent Specification No. 4924387 (Jeppesen) also describes use of a stenographic device and a controller which separates court reporter keystroke combinations into phonetic and control keystrokes. Unites States Patent Specification No. 5272571 (L. R. Linn and Associates) also describes simultaneous recording of keystrokes and audio data. It also describes later transcription. During processing, a table is generated which links stenotype keystrokes with fields, audio file pointers, and corresponding text strings.

Such systems provide a good deal of textual information in near real time. However, where comprehensive editing is required the systems are quite inflexible. Also, it appears that a large extent of manpower is required during the audio proceedings.

The invention is therefore directed towards providing a system which both captures audio proceedings in real time in a comprehensive manner, and which allows comprehensive and flexible editing facilities.

According to the invention, there is provided, an audio processing system for generation of transcripts from audio proceedings, the system comprising capture means for recording audio and corresponding textual data and transcription means for generating transcripts, characterised in that,
the capture means comprises a logging means comprising means for generating a textual log file for audio proceedings and for embedding timeline references in the log file; and
the transcription means comprises means for reading the embedded timeline references, for correlating the timeline references to position data in an audio sound file, and for automatically locating and playing back sound from the sound file in response to selection of indicia indicating timeline references in the log file.

In one embodiment, the capture means comprises a recording means comprising means for recording the audio proceedings in the sound file.

Preferably, the recording means comprises means for simultaneously generating timeline data and making said data available to the logging means.

In one embodiment, the recording means comprises means for automatically generating the sound file on a server and for updating the sound file during the audio proceedings, and for writing said timeline data to a tag file on the server, and the logging means comprises means for performing reads from the tag file on the server during generation of the log file.

Preferably, the recording means comprises means for automatically writing a current sound file name and an activity flag indicating if audio proceedings are about to begin, have begun, or have stopped, and the logging means comprises means for reading said flag and operating accordingly.

In another embodiment, the recording means comprises means for writing an overlap flag to the tag file to indicate if the current sound is in an overlap period between sound takes.

In a further embodiment, the logging means comprises means for automatically embedding timeline references upon input of a new speaker identity in the log file annotation inputs.

Preferably, the logging means comprises means for recording initial spoken words after identification data for a new speaker.

In a further embodiment, the timeline references are represented as a symbol at the start of a display text line, the timeline reference being expanded upon selection of the symbol.

In another embodiment, the transcription means comprises means for exporting the log file to a word processor application and for playing back the sound file at a position selected by a user using the word processor application for transcript editing.

Preferably, the transcription means comprises for automatically displaying a time counter for the current sound file position to allow user input of a timeline reference in a log file or in a transcript file.

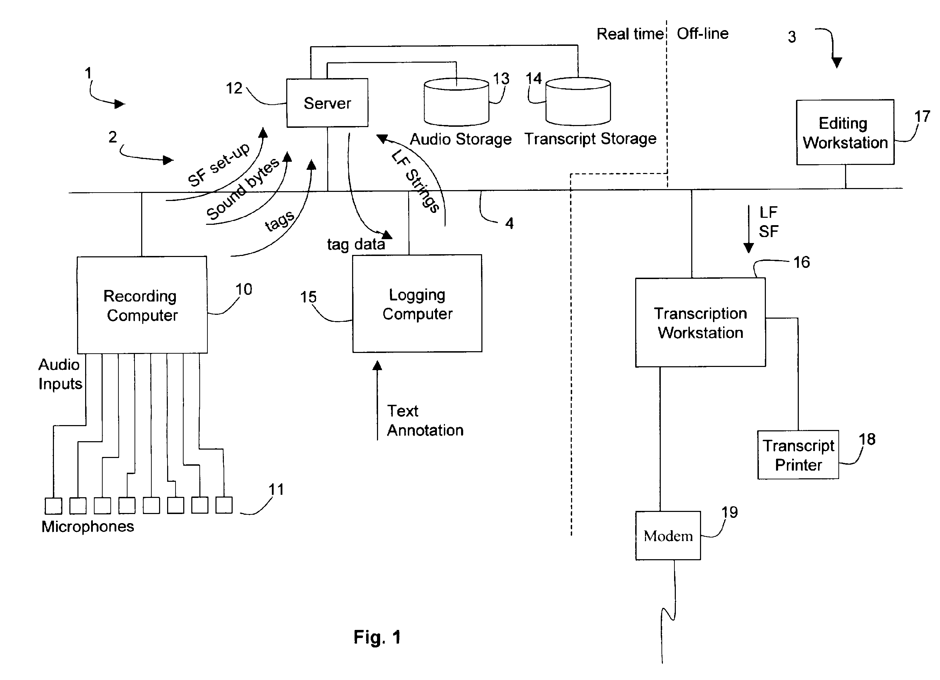

The invention will be more clearly understood from the following description of some embodiments thereof, given by way of example only with reference to the accompanying drawings in which:-
Fig. 1 is a schematic representation of an audio processing system of the invention;
Fig. 2 is a representation of a tag file generated within the system;
Fig. 3 is a representation of part of a log file generated within the system; and
Fig. 4 is a representation of a part of a transcript generated by the system.

Referring to the drawings, there is shown an audio processing system 1 of the invention. The system 1 comprises a real time section 2 and an off-line transcription section 3.

A local area network 4 interconnects the various processing devices. These include a recording computer 10 which receives audio inputs from microphones 11. The recording computer 10 accesses a server 12 via the network 4. The server 12 has an audio storage area 13 and a transcript storage area 14.

A logging computer 15 receives manual text annotation inputs and it also communicates with the server 12. The recording computer 10 and the logging computer 15 are the primary real time devices within the system and both access the server 12 and indeed access the same folders or directories within the server 12 storage structures.

The off-line section 3 comprises a transcription workstation 16, an editing workstation 17, a transcript printer 18, and a modem 19. The printer 18 is for printing of prepared transcripts of audio proceedings, and the modem 19 is for remote communication of transcripts. The network is in this embodiment a local area network, however, the various devices may be distributed more widely using wide area network technology. Thus, the basic design of the system 1 is very flexible.

The system 1 may be used for generation of transcripts of audio proceedings in a parliament chamber or in a court, for example. For illustrative purposes, it is presumed that the audio proceedings are in a parliament chamber. These proceedings are broken into "takes" each in this embodiment 10 minutes long. The recording computer 10 and the logging computer 15 operate in real time to capture data and log it into the server 12.

The recording computer 10 sets up a sound file (SF) on the server 12 in a particular folder within the audio storage area 13, the folder being associated with a particular session of audio proceedings such as one parliamentary day. A sound file is configured for storing digital audio data in a conventional format such as a ".wav" format. The recording computer 10 also has a clock which is reset at the start of the take and this is used to generate entries for a tag file which is also set up on the server 12. The tag file is continuously updated and is not associated with any particular take, but is associated with an audio proceedings session.

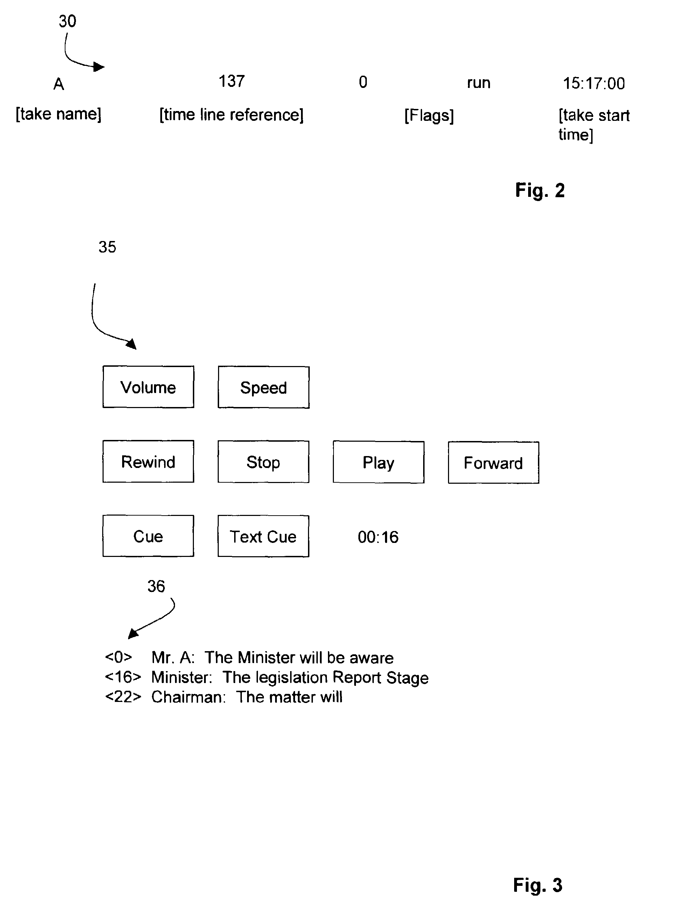

In Fig. 2, a tag file is indicated by the numeral 30 and in this example it comprises the following data fields:-
A: The take name. These run in alphabetical sequence.
137: This is a timeline reference, namely a time stamp of 137 seconds into the take.
Flags: A first flag indicates with a "0" that there is currently no overlap, and with a "1" that there is currently overlap between takes. A second flag indicates with the word "set" that a take is about to begin, with the word "run" that a take is currently active, and with a word "stop" that a take has ended.
The start time of the take, in this case 15:17:00.

The recording computer 10 operates a timer which correlates one second segments to eight kB of audio data. The recording computer 10 outputs a tag file update at six second intervals and so typically the timeline reference increments by six seconds with every update. Also, of course, the recording computer 10 outputs the sound bytes. The frequency for this output is one second segments, each with 8 kB.

At the same time, the logging computer 15 operates in real time to generate a log file (LF) corresponding to the particular sound file (SF) in a one-to-one relationship. The log file is stored in the same folder or directory on the server audio storage area 13. It is also identified by the same name ("A") as the corresponding sound file. The logging computer 15 receives text annotation inputted by a reporter. A sample 35 is illustrated in Fig. 3. The logging computer 15 polls the tag file every two seconds until it detects a "run" flag, upon which it automatically sets up a corresponding log file and stores it in the audio storage area 13. The log file is then updated with a new line giving a speaker identity and the first few words. In this embodiment, an update is performed for every "Carriage Return" keystroke.

The tag file 30 acts as a dynamic link between the recording and logging computers 10 and 15 and this link is maintained as long as the audio proceedings continue. Switch over to a new take is flagged by the overlap flag "0/1" and the overlap period in this embodiment is 15 seconds. Thus, each sound file records 15 seconds of the next take which provides sufficient time for roll-over. However, this time is user-configurable to a desired setting. By simply monitoring the tag file, the logging computer 15 generates the appropriate logging files in real time and records the relevant text annotations. Eventually, the "stop" flag will be written to the tag file, upon which the logging computer 15 stops generating new log files.

At the end of the session, there is a set of log and sound files, there being a single log file and a single sound file associated with each individual take. An important aspect of generation of the log file is that the logging computer 15 embeds a timeline reference in the log file. Examples 36 are shown in Fig. 3. These three timeline references are <0>, <16>, and <22>. This information is available to the logging computer from the tag file and it is automatically embedded as text together with the text annotations which are inputted.

When it is desired to generate a transcript for the audio proceedings session, the transcription workstation 16 and the editing workstation 17 are operated. The transcription workstation 16 retrieves the sound and log files for the session and opens corresponding sound and log files simultaneously. The transcription workstation 16 has foot pedals which are equivalent to those of conventional audio tape dictating playback machines, namely Rewind, Play, and Forward. An operator operates these pedals in a manner equivalent to using a dictation and playback machine. Again, the transcription computer 16 associates a one second time period with 8 kB of sound data and it "rewinds" or "fast forwards" through the relevant sound file by 8kB for each second of depression of the Rewind or Fast-Forward pedals. Also, the transcription workstation 16 recognises keyboard or mouse selections of lines of text such as one of the lines illustrated in Fig. 3. The embedded timeline reference allows it locate the relevant position in the corresponding sound file. For example, the third line illustrated in Fig. 3 is 22 seconds into the take and therefore the workstation starts playback at byte number 176 kB in the sound file. In this way, the operator can type in text as he or she listens to playback of the sound file. The location within the log file for typing the text is indicated by the name of the speaker followed by the first few words which are spoken.

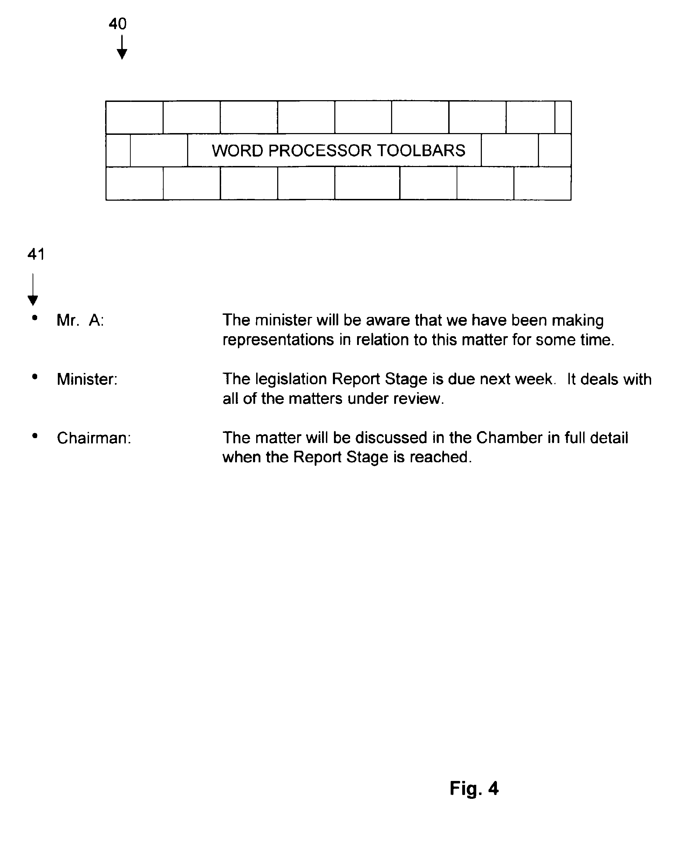

This workstation also operates to cut and paste the log file into a third-party word processing application. Indeed, cutting and pasting of log files into a word processor application allows creation of an initial template for generation of a transcript. An important aspect of the embedded tags within the log file are that they are in a text format which is ported with the other text into the word processor template. A sample template 40 is shown in Fig. 4. As the workstation 16 operates, it not only displays the text, but also displays either a symbol indicating the timeline reference or the reference itself. The symbol may be a dot such as a dot 41 at the start of the line to indicate that expansion of this dot displays the timeline reference. During execution of the transcription programs, the workstation 16 automatically displays the time counter for the current text. This is indicated as 00.16 in the example of Fig. 3. Thus, an operator who has both the transcription word processor file and the log file open can manually input a timeline reference in order to make these references more comprehensive in the transcript. These references are particularly important also for the editing workstation 17 as additional operators may provide an input into a particular transcript, depending on their particular transcript skills. It must be borne in mind that parliamentary transcription is a highly skilled task and the system 1 allows input from a number of people in a simple and highly controlled and structured manner.

It will be appreciated that the invention provides for generation of a transcript with very accurate real time recording of sound and annotation data and interlinking of sound, logging, and transcript files in a manner whereby comprehensive and accurate transcripts may be generated with any required extent of editing and input from different people. At the same time, the system also allows re-checking back to the sound files in a highly organised and efficient manner. Even the final transcript product is correlated back to the audio recording which was captured live.

The invention is not limited to the embodiments described but may be varied in construction and detail within the scope of the claims.

## Claims

1. An audio processing system (1) for generation of transcripts from audio proceedings, the system (1) comprising capture means for recording audio and corresponding textual data and transcription means for generating transcripts, characterised in that,
the capture means comprises a logging means (15) comprising means for generating a textual log file (LF) for audio proceedings and for embedding timeline references in the log file; and
the transcription means (16) comprises means for reading the embedded timeline references, for correlating the timeline references to position data in an audio sound file (SF), and for automatically locating and playing back sound from the sound file in response to selection of indicia indicating timeline references in the log file.

2. A system as claimed in claim 1, wherein the capture means comprises a recording means (10) comprising means for recording the audio proceedings in the sound file (SF).

3. A system as claimed in claim 2, wherein the recording means (10) comprises means for simultaneously generating timeline data and making said data available to the logging means.

4. A system as claimed in claim 3, wherein the recording means (10) comprises means for automatically generating the sound file on a server and for updating the sound file during the audio proceedings, and for writing said timeline data to a tag file on the server, and the logging means comprises means for performing reads from the tag file on the server during generation of the log file.

5. A system as claimed in claim 4, wherein the recording means comprises means for automatically writing a current sound file name and an activity flag indicating if audio proceedings are about to begin, have begun, or have stopped, and the logging means comprises means for reading said flag and operating accordingly.

6. A system as claimed in claims 4 or 5, wherein the recording means comprises means for writing an overlap flag to the tag file to indicate if the current sound is in an overlap period between sound takes.

7. A system as claimed in any preceding claim, wherein the logging means comprises means for automatically embedding timeline references upon input of a new speaker identity in the log file annotation inputs.

8. A system as claimed in any preceding claim, wherein the logging means comprises means for recording initial spoken words after identification data for a new speaker.

9. A system as claimed in any preceding claim, wherein the timeline references are represented as a symbol at the start of a display text line, the timeline reference being expanded upon selection of the symbol.

10. A system as claimed in any preceding claim, wherein the transcription means (16) comprises means for exporting the log file to a word processor application and for playing back the sound file at a position selected by a user using the word processor application for transcript editing.

11. A system as claimed in any preceding claim, wherein the transcription means comprises for automatically displaying a time counter for the current sound file position to allow user input of a timeline reference in a log file or in a transcript file.

12. A system substantially as described with reference to the accompanying drawings.

13. A computer program product directly loadable into the internal memory of a digital computer, and comprising software code for implementing the capture means and the transcription means when said product is run on a digital computer.
